# EUROPEAN PATENT APPLICATION

(11) **EP 4 535 506 A1**
(43) Date of publication of application: **09.04.2025**
(21) Application number: 24819446.6
(22) Date of filing: 06.02.2024
(51) Int. Cl.: H01M 10/48, H01M 10/42

(54) **BATTERY PACK FOR PREVENTING OVERHEATING MISDIAGNOSIS DUE TO ENVIRONMENTAL TEMPERATURE AND METHOD FOR PREVENTING MISDIAGNOSIS**

(30) Priority: 08.06.2023 KR 20230073558; 08.01.2024 KR 20240002869
(71) Applicant: LG Energy Solution, Ltd., Seoul 07335 (KR)
(72) Inventor: KIM, Jun Yeong, Daejeon 34122 (KR)
(74) Representative: Plasseraud IP
(86) International application number: PCT/KR2024/001765
(87) International publication number: WO 2024/253292

(57) **Abstract**

The present invention provides a battery pack, in which an internal temperature and an external temperature of the battery pack are measured at a predetermined period from different temperature sensors installed in each of battery cells, a BMS, and a pack case of the battery pack and then be compared with a predetermined reference value to perform battery pack overheating diagnosis, in particular, determine whether causes of the overheating are due to internal or external factors of the battery pack, and a method for diagnosing the overheating.

## Description

### TECHNICAL FIELD

The present invention relates to a technology for detecting battery overheating. In particular, the present invention relates to a battery pack and a detection method for detecting causes of battery overheating by distinguishing an increase in temperature of a battery itself and an increase in temperature due to external environmental factors.

### BACKGROUND ART

Overheating often occurs due to an increase in temperature of a battery during a battery operation. In this case, it is often difficult to determine whether the cause is due to the increase in temperature of the battery itself or the increase in temperature of the external environments.

In this regard, in a case such as Patent Document 1, in order to solve the problem of determining temperature abnormality based on only an absolute temperature of the battery cell itself, without reflecting any change in ambient temperature of the battery cell, temperature sensors are installed around the battery cell and on a surface of the battery cell, respectively to detect an increase in ambient temperature by using a difference between the temperature of the battery cell itself and the temperature around the battery cell even before the temperature of the battery cell rises, thereby quickly diagnosing an abnormal condition in temperature of the battery cell.

In case of Patent Document 2, a technology in which a pack temperature of a pack case is measured to equalize temperatures of battery cells, and only when the pack temperature is below an appropriate temperature range, the cells of which cell temperatures are below an average cell temperature are heated to balance the pack temperature to the appropriate temperature range is disclosed.

However, none of the above prior arts provides a technology for diagnosing battery overheating by distinguishing whether it is due to overheating of the cells or an increase in temperature of the external environment.

### DISCLOSURE OF THE INVENTION

### TECHNICAL PROBLEM

The present invention provides a method for diagnosing whether overheating is due to an increase in temperature of a battery pack, due to an increase in temperature of battery cells, or due to an increase in external temperature, which is not provided by the above-described related art, and a battery pack that enables the diagnosis method.

### TECHNICAL SOLUTION

To solve the above problems, a battery pack configured to perform overheating diagnosis of a battery pack includes: one or more battery cells; a battery management system (BMS) configured to diagnose overheating of the battery pack according to an increase in internal temperature of the battery pack or an increase in external temperature of the battery pack and determine whether a cause of the overheating diagnosis is due to an increase in internal temperature of the battery pack or an increase in external temperature; a pack case configured to accommodate the battery cells and the BMS; one or more cell temperature sensors disposed adjacent to the battery cells and configured to provide measured values for determining the increase in internal temperature of the battery pack; and one or more pack temperature sensors attached to an inner or outer surface of the pack case and configured to provide the measured values for determining the increase in external temperature of the battery pack.

Here, the BMS may be configured to receive the measured values from the cell temperature sensor at a predetermined period so as to determine the increase in internal temperature of the battery pack and receive the measured values from the pack temperature sensor at a predetermined period so as to determine the increase in external temperature of the battery pack and may be configured to receive the measured values from the cell temperature sensor and the pack temperature sensor so as to calculate a pack internal temperature and a pack external temperature from the measured values and perform the overheating diagnosis of the battery pack based on the pack internal temperature and pack external temperature values, wherein if the external temperature value of the pack increases faster than the internal temperature value of the pack so that the overheating is diagnosed, the cause of the overheating diagnosis may be determined to be caused by external factors to the battery pack.

In addition, the battery pack according to the present invention may further include a BMS temperature sensor disposed adjacent to the BMS, wherein the BMS may be configured to receive measured values from the cell temperature sensor and the BMS temperature sensor at a predetermined period so as to determine the increase in internal temperature of the battery pack. The pack temperature sensor according to the present invention may be mounted on an inner surface or an outer surface of the pack case, and when the pack temperature sensor is mounted on the outer surface, the pack case may be provided with a temperature measurement hole at a position corresponding to a portion at which the pack temperature sensor is attached, and a heat dissipation film may be attached to a top surface of the pack temperature sensor facing the inner surface of the pack case to block heat.

In addition, the present invention provides a system for diagnosing overheating of a battery pack, the system including: the one or more battery packs; and an upper level controller configured to receive the internal temperature of the battery pack and the external temperature of the battery pack from the battery pack so as to perform the overheating diagnosis of the battery pack. When diagnosing the overheating of the battery pack, the upper level controller may be configured to determine that the overheating is caused by external factors of the pack when the external temperature of the battery pack increases above a predetermined reference value earlier than the internal temperature of the battery pack.

In addition, the present invention provides a method for diagnosing overheating of a battery pack, the method including: a battery pack internal temperature measurement process of measuring an internal temperature of the battery pack at a predetermined period; a battery pack external temperature measurement process of measuring an external temperature of the battery pack at a predetermined period; a battery pack overheating diagnosis process of diagnosing whether the battery pack is overheated based on the pack internal temperature and the pack external temperature; and an overheating diagnosis cause determination process of determining that the overheating diagnosis is misdiagnosed when the external temperature of the pack increases faster than the internal temperature of the pack in the overheating diagnosis process.

Here, in the overheating diagnosis process, when the internal temperature of the pack is greater than the predetermined reference value, the overheating may be diagnosed as the overheating of the battery pack, in the overheating diagnosis cause determination process, when the external temperature of the pack increases faster than the internal temperature of the pack, the overheating may be diagnosed as the overheating due to the increase in external temperature. Here, the pack internal temperature may be acquired from a battery cell accommodated inside a pack case of the battery pack or a temperature sensor mounted on a BMS, and the pack external temperature may be obtained from a temperature sensor attached to the pack case of the battery pack.

Furthermore, the present invention provides a method for diagnosing overheating of a battery system, comprising: a battery pack temperature measurement process in which each battery pack measures the internal temperature and the external temperature of each battery pack; a measurement value reception process in which the upper level controller receives measured values of the internal and external temperatures of each battery pack; an overheating diagnosis process in which the upper level controller performs the overheating diagnosis of each battery pack based on the received measured values of the internal and external temperatures of each battery pack; and an overheating diagnosis cause determination process of determining whether the overheating diagnosis is due to internal or external factors of the battery pack.

Here, each battery pack measures the internal temperature and external temperature from different temperature sensors attached to different positions of the battery pack, the internal temperature is acquired from a battery cell accommodated inside a pack case of the battery pack or a temperature sensor mounted on a BMS, and the external temperature is acquired from a temperature sensor attached to the pack case of the battery pack.

### ADVANTAGEOUS EFFECTS

According to the present invention, the internal temperature and the external temperature of the battery pack may be measured at the predetermined period from the different temperature sensors installed in each of the battery cells, the BMS, and the pack case of the battery pack and then be compared with the predetermined reference value to perform the battery pack overheating diagnosis, in particular, determine whether the causes of the overheating are due to the internal or external factors of the battery pack, thereby preventing the misdiagnosis of the overheating or investigating the cause of the overheating so as to improve the efficiency of battery operation.

### BRIEF DESCRIPTION OF THE DRAWINGS

The following drawings attached in this specification illustrate a preferred embodiment of the present invention and function to make further understood the technical spirit of the present invention along with the detailed description of the invention. The present invention should not be construed as being limited to only the drawings.
FIG. 1 is a view illustrating a structure of a battery pack according to an embodiment of the present invention.
FIG. 2 is a view illustrating a structure in which a cell temperature sensor is mounted on a battery cell according to an embodiment of the present invention.
FIG. 3 is a view illustrating a structure in which a BMS temperature sensor is mounted on a BMS according to an embodiment of the present invention.
FIG. 4 is a view illustrating a structure of a pack case and a structure in which a pack temperature sensor is mounted on a pack case according to an embodiment of the present invention.
FIG. 5 is a view illustrating a structure of a FPCB including a temperature sensor according to an embodiment of the present invention.
FIG. 6 is a block diagram illustrating a configuration of a system in which a plurality of battery packs are controlled by an upper level controller according to the present invention.
FIG. 7 is a flowchart illustrating a method for diagnosing a temperature of a battery pack according to the present invention.

### MODE FOR CARRYING OUT THE INVENTION

Hereinafter, a structure of the battery pack and an overheating diagnosis method according to the present invention will be described with reference to the drawings.

### 1. Structure of battery pack (100) according to the present invention

The battery pack 100 according to the present invention may include a plurality of battery cells 10, a battery management system (BMS) 20 that manages the battery cells, a battery pack case 30 that accommodates the plurality of battery cells and the BMS, one or more cell temperature sensors 40 that measure temperatures of the battery cells, and one or more pack temperature sensors 60 that measure a temperature of the battery pack, and may further include one or more BMS temperature sensors 50 that measure a temperature of the BMS.

### (1) Battery cells (10)

The battery pack 100 according to the present invention includes typical battery cells 10. One or more cell temperature sensors 40 that measure temperature of the cells are mounted on the battery cells 10.

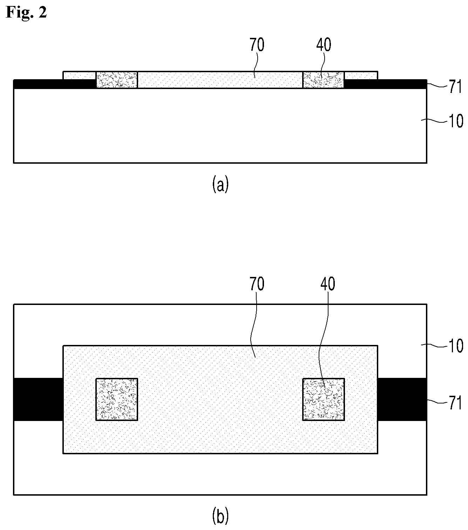

As illustrated in FIG. 2, the cell temperature sensors 40 may be attached to the battery cells through a FPCB 70 for mounting the temperature sensor. FIG. 2a is a side cross-sectional view illustrating a state in which two cell temperature sensors 40 are mounted at different positions of the battery cell 10 by using the FPCB 70 for mounting the temperature sensor, and FIG. 2b is a top view illustrating a state in which the cell temperature sensor 40 is mounted.

### (2) BMS (20)

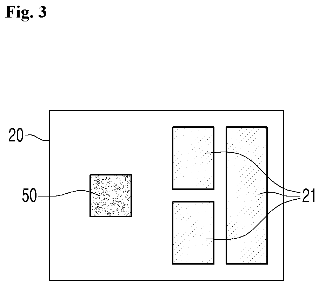

The battery pack 100 according to the present invention includes a typical BMS 20. A BMS temperature sensor 50 that measures a temperature around the BMS 20 is mounted on a board constituting the BMS 20. As illustrated in the block diagram of FIG. 3, the BMS temperature sensor 50 may be disposed around other elements 21 constituting the BMS 20, and a detailed circuit pattern such as a connection relationship between the elements was omitted in the block diagram of FIG. 3.

The BMS 20 according to the present invention adopts a typical BMS in its structure, but its function performs a method for diagnosing a temperature of the battery pack according to the present invention.

The BMS 20 reads temperature measurement signals from the cell temperature sensor 40, the pack temperature sensors 60, or the additional BMS temperature sensor 50 at positions at which the respective sensors are mounted to calculate temperatures of the cell, the BMS, and the pack case based on the read temperature measurement signals. The pack case temperature calculated from the measured value of the pack temperature sensor 60 calculates an environmental temperature outside the battery pack 100.

The BMS 20 performs the overheating diagnosis of the battery pack using the cell temperature and pack case temperature, or additionally the BMS ambient temperature. When the overheating is diagnosed, it is determined whether the cause of the overheating diagnosis is due to an increase in temperature of the internal battery cell or the BMS or due to an increase in external environmental temperature of the battery pack 100. Specific procedure and method for determining whether the cause of the overheating diagnosis is due to the increase in temperature inside the battery pack or increase in temperature outside the battery pack are described below.

### (3) Pack case(30)

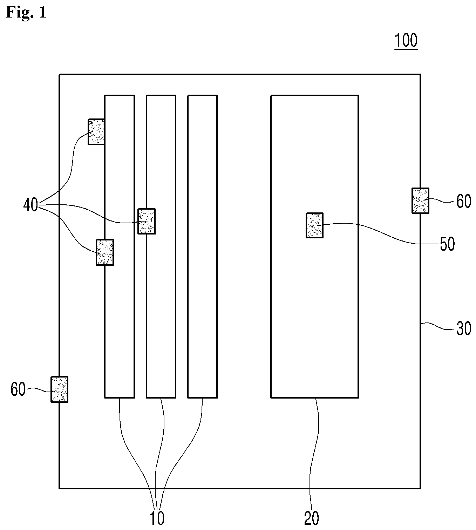

As illustrated in FIG. 1, the pack case 30 according to the present invention accommodates the plurality of battery cells 10 and the BMS 20 and includes one or more pack temperature sensors 60.

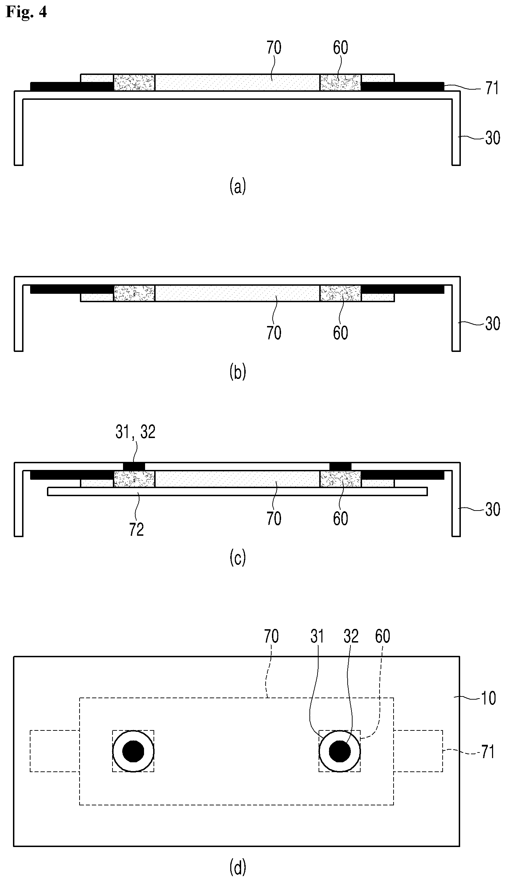

The pack temperature sensors 60 may be attached to an outer surface of the pack case 30 as illustrated in FIG. 4a or an inner surface of the pack case 30 as illustrated in FIG. 4b. When attached to the inner or outer surface, the pack temperature sensors 60 may be mounted and attached to the sensor-mounted FPCB 70 as illustrated in FIG. 4.

As illustrated in FIGS. 4c and 4d, the pack case 30 according to the present invention may include a temperature measurement hole 31. The temperature measurement hole 31 is defined to correspond to the attachment position of the pack temperature sensor 60, especially when the pack temperature sensor 60 is installed on the inner surface of the pack case 30, and thus, the pack temperature sensor 60 is affected more by the external temperature than the internal temperature of the pack case 30 so that the pack temperature sensor 60 is configured to be more sensitive to the external environmental temperature.

As illustrated in FIG. 4c, a top surface of the sensor-mounted FPCB 70 facing the inner surface of the pack case 30 of the pack temperature sensor 60, that is, a top surface of the pack temperature sensor may be provided with a heat dissipation film to dissipate heat so that the pack temperature sensor 60 is configured to be less sensitive to the internal temperature of the pack case 30.

FIGS. 4c and 4d illustrate a configuration in which a temperature transfer pin 32 is disposed in the temperature measuring hole 31 for sealing purposes such as waterproofing or for transferring the external temperature. One end of the temperature transfer pin 32 is in contact with the pack temperature sensor 60 attached to the inner surface of the pack case, and the other end of the temperature transfer pin 32 is exposed to the outside of the pack case 30 through the temperature measurement hole 31 to transfer the external temperature to the pack temperature sensor 60.

In FIG. 4d, it is shown as if there is a pore in the temperature measurement hole 31 and the temperature transfer pin 32, but this is shown for identification on the drawing, and in reality, for case sealing, the pore between the temperature transfer pin 32 and an inner circumferential surface of the temperature measuring hole 31 may be filled with the same material as the temperature transfer pin 32, the same material as the pack case 30, or a heat transfer material. The temperature transfer pin 32 may be made of a known heat transfer material for the purpose of better transferring the temperature outside the pack case 30 to the pack temperature sensor 60.

As illustrated in FIG. 4, the pack temperature sensor 60 may be mounted on the FPCB 31 (flexible printed circuit board) with a printed wire for signal connection to the BMS 20, and the FPCB may be attached to the inner surface or outer surface of the pack case 30 so that the pack temperature sensor 60 measures the temperature of the pack case 30.

### (4) Cell temperature sensor (40)

The cell temperature sensor 40 is provided on a surface of the battery cell 10 to measure a cell surface temperature at predetermined periodic intervals and is connected to transmit a signal for calculating the measured temperature to the BMS.

The cell temperature sensor 40 may be attached to each surface of the plurality of battery cells 10 to calculate the temperature of each of the plurality of battery cells 10, and as illustrated in FIG. 2, the individual battery cells 10 may be attached to a plurality of positions, respectively.

### (5) BMS temperature sensor (50)

The BMS temperature sensor 50 is installed on the BMS 20 to measure an ambient temperature. As illustrated in FIG. 3, the BMS temperature sensor 50 is installed on a printed circuit board (PCB) constituting the BMS 20 to measure a temperature around the BMS 20.

The installed position of the BMS temperature sensor 50 according to the present invention is not limited to the PCB of the BMS and may be configured to be mounted on the sensor-mounted FPCB 70 and attached around the BMS 20.

### (6) Pack temperature sensor (60)

As described above with reference to FIG. 4, one or more pack temperature sensors 60 are attached to the inner or outer surface of the pack case 30 to measure a temperature outside the battery pack case 30 rather than the battery cell 10 or the BMS 20, thereby transmitting a measured value to the BMS 20.

### (7) sensor-mounted FPCB (70)

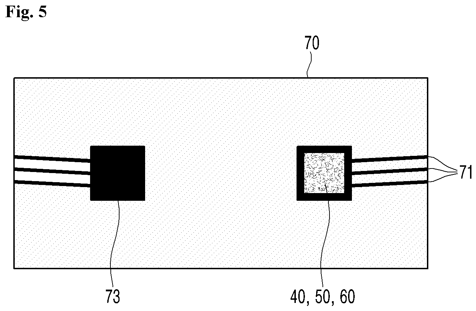

In the present invention, an attachment type of cell temperature sensors to pack temperature sensors is not limited to a specific one. However, as an example of the attachment type, it may be attached to the inner or outer surface of the battery cell 10, the BMS 20, or the pack case 30 through the sensor-mounted FPCB 70 as illustrated in FIG. 5. In FIG. 5, a specific circuit pattern is omitted.

As illustrated in FIG. 5, the sensor-mounted FPCB 70 forms a sensor mounting part 73 on which the temperature sensors are mounted. The temperature sensors are attached to the sensor mounting part 73 to form a temperature measurement portion, and a temperature sensor connection wire 71 of the sensor-mounted FPCB 70 is connected to wire patterns of the FPCB 70, to which the temperature sensors 40, 50, and 60 are connected to transmit the measured values from the sensors to the BMS 20, to transmit the measured values of the temperature sensors to the BMS. When the sensor-mounted FPCB 70 on which the pack temperature sensor 60 is mounted is attached to the outer surface of the pack case 30, the sensor-mounted FPCB 70 is connected inside the pack case 30 to transmit the measured value of the pack temperature sensor 60 to the BMS. For this, a wire connection hole (not shown) for internal connection of the temperature sensor connection wire 71 may be defined in the pack case 30.

### 2. System 200 for diagnosing overheating of battery pack

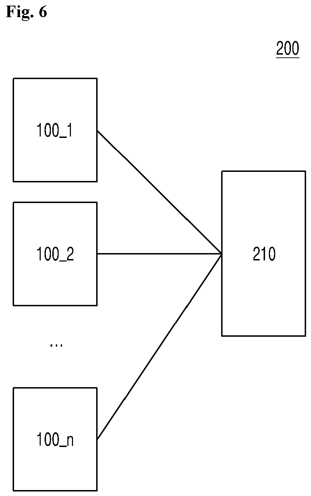

FIG. 6 illustrates a configuration of a system 200 for diagnosing the overheating of the battery pack, which diagnoses the overheating of the battery pack 100 in a battery system including one or more, i.e., n battery packs (100_a, a = 1, 2, 3, ..., n) described above.

In the system 200 for diagnosing the overheating of the battery pack, i.e., the battery system including one or more, i.e., n battery packs (100_a, a = 1, 2, 3, ..., n), as described above, the battery pack 100 measures the temperatures inside and outside the battery pack by including the cell temperature sensor or the pack temperature sensor, and when diagnosing the overheating of each battery pack 100, the BMS 20 of each battery pack 100 uses the measured value of the cell temperature sensor or the pack temperature sensor to determine whether the cause of the overheating diagnosis is due to an increase in internal temperature of the battery pack 100 or an increase in external temperature and then transmit the determined result to the upper level controller 210.

The upper level controller 210 may be a battery rack constituted by the plurality of battery packs 100 or a controller of a system constituted by the plurality of battery packs 100 and the plurality of battery racks.

In another embodiment, the BMS 20 of the battery pack 100 transmits the temperature measurement value to the upper level controller 210, and the upper level controller 210 receives the temperature measurement results from each battery pack 100 to perform the overheating diagnosis of each battery pack 100 and determine whether the cause of the overheating diagnosis is due to the increase in temperature inside the battery pack or the increase in temperature outside the battery pack.

Specific procedure and method for determining whether the cause of the overheating diagnosis is due to the increase in temperature inside the battery pack or increase in temperature outside the battery pack are described below.

### 3. Method for diagnosing overheating of battery pack

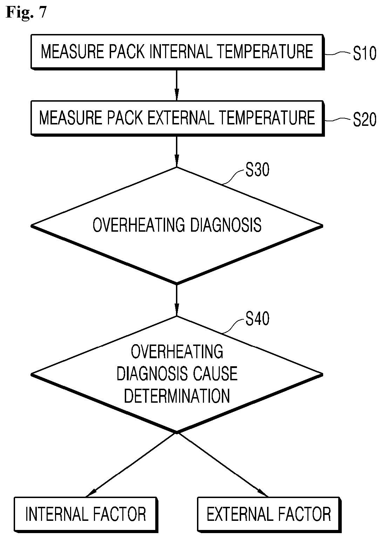

Referring to FIG. 7, a method for diagnosing the overheating of the battery pack according to the present invention will be described.

### (1) Battery pack internal temperature measurement process (S10)

This process is a procedure in which a BMS 20 measures a temperature of a battery cell 10 at predetermined periodic intervals from at least one or more cell temperature sensors 40 attached to the battery cell 10.

In addition, the battery internal temperature measurement process may include a procedure in which the BMS 20 additionally measures a BMS temperature from a BMS temperature sensor 50 attached around the BMS 20 in addition to the cell temperature sensors 40.

The BMS 20 may calculate a maximum value of the measured temperatures of the battery cells 10 and the BMS as a battery internal temperature to determine the overheating by comparing the maximum value with a predetermined first reference value.

### (2) Battery pack external temperature measurement process (S20)

This process is a procedure in which the BMS 20 determines an external temperature of the battery pack using the measured values from at least one or more pack temperature sensors 60 attached to the battery pack case 30 of the battery pack 100. The BMS 20 may determine the overheating by comparing the external temperature of the battery pack with a predetermined second reference value.

### (3) Battery pack overheating diagnosis process (S30)

This process is a procedure in which the BMS 20 diagnoses the overheating of the battery pack by comparing the internal temperature of the battery pack and the external temperature of the battery pack measured in operations S10 and S20 with a predetermined reference value.

In the battery pack overheating diagnosis process, if the internal temperature of the battery pack is higher than the predetermined first reference value, or the external temperature of the battery pack is higher than the predetermined second reference value, it is diagnosed as the overheating. The first reference value and the second reference value may be set to be the same or may be set to be different from each other.

In another embodiment, in the battery pack overheating diagnosis process, when the internal temperature of the battery pack is not higher than the predetermined first reference value even if the external temperature of the battery pack is higher than the second reference value, in a predetermined temperature measurement cycle, it may not be diagnosed as the overheating, and only when the battery pack internal temperature is higher than the predetermined first reference value, it may be diagnosed as the overheating.

### (4) Overheating diagnosis cause determination process (S40)

The BMS 20 performs the operations S10 to S30 at predetermined periodic intervals, and when the battery pack overheating is diagnosed in the operation S30 of the predetermined period, it is determined whether the overheating is diagnosed due to an increase in internal temperature of the battery pack or an increase in external temperature of the battery pack.

That is, if the external temperature of the battery pack is higher than the predetermined second reference value, but the internal temperature of the battery pack is not higher than the predetermined first reference value in a predetermined period, even if the battery pack is determined to be overheated, it is determined that the overheating is not caused by the overheating of the battery cells or the BMS, but by external factors of the battery pack, and also, even if the internal temperature of the battery pack is higher than the predetermined first reference value in the subsequent period, it is determined that the battery pack overheating diagnosis is caused by the external factors of the battery pack, or that the overheating diagnosis is misdiagnosed.

In the battery pack overheating diagnosis process (S30), when the internal temperature of the battery pack is not higher than the predetermined first reference value even if the external temperature of the battery pack is higher than the second reference value, in a predetermined temperature measurement cycle, it may not be diagnosed as the overheating, and only when the battery pack internal temperature is higher than the predetermined first reference value, it may be diagnosed as the overheating. However, even in this case, in the overheating diagnosis cause determination process (S40), the BMS 20 determines that the external temperature of the battery pack increases earlier than the predetermined second reference value when the internal temperature of the battery pack is higher than the predetermined first reference value, and then, determines that the cause of the overheating diagnosis is due to the external factors of the battery pack if the internal temperature of the battery pack is higher than the predetermined first reference value.

As illustrated in FIG. 6, even in a system which is provided with a plurality of battery packs 100_a (a = 1, 2, ..., n), and in which the upper level controller 210 performing the overheating diagnosis of the plurality of battery packs, the method in which the upper level controller 210 performs the overheating diagnosis of each battery pack is the same. When the BMS 20 of each battery pack receives the overheating diagnosis result or the battery pack internal temperature measurement value and the battery pack external temperature measurement value from each battery pack 100_a through the operations S10 to S40, the upper level controller 210 performs the overheating diagnosis for each battery pack and determines the cause of the overheating.

That is, the present invention provides a method for diagnosing overheating of a battery system including one or more battery packs provided with separate temperature sensors to measure each of internal and external temperatures of a battery pack, and an upper level controller that receives the internal and external temperatures of each battery pack from the battery pack, and the method includes: a battery pack temperature measurement process in which each battery pack measures the internal temperature and the external temperature of each battery pack; a measurement value reception process in which the upper level controller receives measured values of the internal and external temperatures of each battery pack; an overheating diagnosis process in which the upper level controller performs the overheating diagnosis of each battery pack based on the received internal and external temperature measurements of each battery pack; and an overheating diagnosis cause determination process of determining whether the overheating diagnosis is due to internal or external factors of the battery pack.

Here, each battery pack measures the internal temperature and external temperature from different temperature sensors attached to different positions of the battery pack, the internal temperature is acquired from a battery cell accommodated inside a pack case of the battery pack or a temperature sensor mounted on a BMS, and the external temperature is acquired from a temperature sensor attached to the pack case of the battery pack. The respective temperature sensors correspond to the cell temperature sensor 40, the BMS temperature sensor 50, and the pack temperature sensor 60, which are described above.

The overheating diagnosis or the overheating diagnosis cause determination of each battery pack according to the present invention described above may be well understood by those skilled in the art that the overheating diagnosis method is performed by mounting a series of processor execution algorithms that perform the operations S10 to S40 in the BMS 20 or the upper level controller 210 of each battery pack.

As described above, in the battery pack and the method for diagnosing the overheating of the battery pack according to the present invention, when diagnosing the overheating for a stable operation of the battery, whether the overheating is diagnosed due to the overheating of the battery cells constituting the battery pack or the BMS itself, or overheating is diagnosed due to the environmental factors outside the battery pack may be distinguished to achieve the more accurate battery operation.

In the present invention, the reference numerals and names of each component used are as follows.

| | | | |
|---|---|---|---|
| 100 | Battery pack | 200 | System for diagnosing overheating of battery |
| | pack | | |
| 10 | Battery pack | 20 | BMS |
| 30 | Pack case | 31 | Temperature measurement hole |
| 32 | Temperature transfer pin | 40 | Cell temperature sensor |
| 50 | BMS temperature sensor | 60 | Pack temperature sensor |
| 70 | sensor-mounted FPCB | 71 | Temperature sensor connection wire |
| 72 | Heat dissipation film | 73 | Sensor mounting part |
| 210 | Upper level controller | | |

## Claims

1. A battery pack configured to perform overheating diagnosis of a battery pack, the battery pack comprising:
one or more battery cells;
a battery management system BMS configured to diagnose overheating of the battery pack according to an increase in internal temperature of the battery pack or an increase in external temperature of the battery pack and determine whether a cause of the overheating diagnosis is due to an increase in internal temperature of the battery pack or an increase in external temperature;
a pack case configured to accommodate the battery cells and the BMS;
one or more cell temperature sensors disposed adjacent to the battery cells and configured to provide measured values for determining the increase in internal temperature of the battery pack; and
one or more pack temperature sensors attached to an inner or outer surface of the pack case and configured to provide the measured values for determining the increase in external temperature of the battery pack.

2. The battery pack of claim 1, wherein the BMS is configured to receive the measured values from the cell temperature sensor at a predetermined period so as to determine the increase in internal temperature of the battery pack and receive the measured values from the pack temperature sensor at a predetermined period so as to determine the increase in external temperature of the battery pack.

3. The battery pack of claim 2, wherein the BMS is configured to receive the measured values from the cell temperature sensor and the pack temperature sensor so as to calculate a pack internal temperature and a pack external temperature from the measured values and perform the overheating diagnosis of the battery pack based on the pack internal temperature and pack external temperature values,
wherein if the external temperature value of the pack increases faster than the internal temperature value of the pack so that the overheating is diagnosed, the cause of the overheating diagnosis is determined to be caused by external factors to the battery pack.

4. The battery pack of claim 3, further comprising a BMS temperature sensor disposed adjacent to the BMS,
wherein the BMS is configured to receive measured values from the cell temperature sensor and the BMS temperature sensor at a predetermined period so as to determine the increase in internal temperature of the battery pack.

5. The battery pack of claim 1, wherein the pack temperature sensor is mounted on an inner surface of the pack case, and
the pack case is provided with a temperature measurement hole at a position corresponding to a portion at which the pack temperature sensor is attached.

6. The battery pack of claim 5, wherein the pack case further comprises a temperature transfer pin configured to transfer the external temperature of the pack to the pack temperature sensor attached to the inner surface of the pack case through the temperature measurement hole.

7. The battery pack of claim 5, wherein a heat dissipation film is attached to a top surface of the pack temperature sensor facing the inner surface of the pack case to block heat.

8. A system for diagnosing overheating of a battery pack, the system comprising:
one or more battery packs of any one of claims 1 to 7; and
an upper level controller configured to receive the measured values of the internal temperature of the battery pack and the external temperature of the battery pack from the battery pack so as to perform the overheating diagnosis of the battery pack.

9. The system of claim 8, wherein, when diagnosing the overheating of the battery pack, the upper level controller is configured to determine that the overheating is caused by external factors of the pack when the external temperature of the battery pack increases above a predetermined reference value earlier than the internal temperature of the battery pack.

10. A method for diagnosing overheating of a battery pack, the method comprising:
a battery pack internal temperature measurement process of measuring an internal temperature of the battery pack at a predetermined period;
a battery pack external temperature measurement process of measuring an external temperature of the battery pack at a predetermined period;
a battery pack overheating diagnosis process of diagnosing whether the battery pack is overheated based on the pack internal temperature and the pack external temperature; and
an overheating diagnosis cause determination process of determining that the overheating diagnosis is misdiagnosed when the external temperature of the battery pack increases faster than the internal temperature of the battery pack in the battery pack overheating diagnosis process.

11. The method of claim 10, wherein, in the battery pack overheating diagnosis process, when the internal temperature of the pack is greater than the predetermined reference value, the overheating is diagnosed as the overheating of the battery pack,
in the overheating diagnosis cause determination process, when the external temperature of the battery pack increases faster than the internal temperature of the battery pack, the overheating is diagnosed as the overheating due to the increase in external temperature.

12. The method of claim 10 or 11, wherein the pack internal temperature is acquired from a battery cell accommodated inside a pack case of the battery pack or a temperature sensor mounted on a BMS, and
the pack external temperature is obtained from a temperature sensor attached to the pack case of the battery pack.

13. A method for diagnosing overheating of a battery system, which comprises one or more battery packs provided with separate temperature sensors to measure each of internal and external temperatures of a battery pack, and an upper level controller that receives the internal and external temperatures of each battery pack from the battery pack, the method comprising:
a battery pack temperature measurement process in which each battery pack measures the internal temperature and the external temperature of each battery pack;
a measurement value reception process in which the upper level controller receives measured values of the internal and external temperatures of each battery pack;
an overheating diagnosis process in which the upper level controller performs the overheating diagnosis of each battery pack based on the received measured values of the internal and external temperatures of each battery pack; and
an overheating diagnosis cause determination process of determining whether the overheating diagnosis is due to internal or external factors of the battery pack.

14. The method of claim 13, wherein each battery pack measures the internal temperature and external temperature from different temperature sensors attached to different positions of the battery pack.

15. The method of claim 14, wherein the internal temperature is acquired from a battery cell accommodated inside a pack case of the battery pack or a temperature sensor mounted on a battery management system BMS, and
the external temperature is obtained from a temperature sensor attached to an outer surface or an inner surface of the pack case of the battery pack.
